# EUROPEAN PATENT SPECIFICATION

(11) **EP 2 363 807 B1**
(45) Date of publication and mention of the grant of the patent: **25.03.2020**
(21) Application number: 10183537.9
(22) Date of filing: 20.09.2006
(51) Int. Cl.: G06F 9/46, H04L 12/863

(54) **Address encryption/rate pacing**
Adressverschlüsselung/Steuerung der Geschwindigkeit
Encryption d'addresses / règlage de vitesse.

(30) Priority: 21.09.2005 GB 0519283; 11.01.2006 US 329444
(43) Date of publication of application: 07.09.2011
(62) Divisional of application: 06779503.9
(73) Proprietor: Xilinx, Inc., San Jose, California 95124 (US)
(72) Inventor: Yu, Ching, Santa Carla, CA 95051 (US); Riddoch, David, Cambridge, CB1 2DW (GB); Pope, Steve, Cambridge, CB1 3QJ (GB); Chiang, John Mingyung, San Jose, CA 95131 (US); Singh, Alok, Fremont, CA 94555 (US); Roberts, Derek, Cambridge, CB4 2DB (GB)
(74) Representative: Driver, Virginia Rozanne

(56) References cited:
- WO-A1-01/31854
- US-A1- 2003 189 943
- US-A1- 2005 099 979

## Description

### BACKGROUND INFORMATION

### Field of the Invention

The present invention relates generally to network communications, and more particularly, to efficient transmission of bursts of packets for optimizing a network traffic utilization.

### Description of Related Art

A typical computer system includes a processor subsystem (including one or more processors), a memory subsystem (including main memory, cache memory, etc.; also sometimes referred to herein as "host memory"), and a variety of "peripheral devices" connected to the processor subsystem via a peripheral bus. Peripheral devices may include, for example, keyboard, mouse and display adapters, disk drives and CD-ROM drives, network interface devices, and so on. The processor subsystem communicates with the peripheral devices by reading and writing commands and information to specific addresses that have been preassigned to the devices. The addresses may be preassigned regions of a main memory address space, an I/O address space, or another kind of configuration space. Communication with peripheral devices can also take place via direct memory access (DMA), in which the peripheral devices (or another agent on the peripheral bus) transfers data directly between the memory subsystem and one of the preassigned regions of address space assigned to the peripheral devices.

When large amounts of data are to be transferred across between the memory subsystem and a peripheral device, it is usually highly inefficient to accomplish this by having the processor subsystem retrieve the data from memory and write it to the peripheral device, or vice-versa. This method occupies an enormous amount of the processor's time and resources, which could otherwise be used to advance other processing jobs. It is typically much more efficient to offload these data transfers to a data transfer DMA engine, which can control the transfers while the processor subsystem works on other jobs. The processing subsystem controls the data transfer DMA engine by issuing DMA commands to it, the commands identifying in one way or another the starting address in either host memory or the peripheral device or both, and the length of the transfer desired. DMA commands are also sometimes referred to herein as DMA descriptors, and the portion of a DMA command that identifies a starting address is sometimes referred to herein as a pointer. As used herein, "identification" of an item of information does not necessarily require the direct specification of that item of information. Information can be "identified" in a field simply by *referring* to the actual information through one or more layers of indirection, or by identifying one or more items of different information which are together sufficient to determine the actual item of information. For example, a pointer "identifying" a starting address in host memory may specify the entire physical host memory address, or it may specify an address in a larger memory address space which is mapped to a physical address, or it might specify a virtual address which is mapped to a physical address, or it might specify an address in a user address space which is mapped to a physical address in further dependence upon a user ID of some kind, or it may identify in any of these ways an address that is one less or one greater than the actual starting address identified, and so on. In addition, the term "indicate" is used herein to mean the same as "identify".

In various different computer system arrangements, the data transfer DMA engine may be located across a communication channel from the source of the DMA commands. Often this communication channel is the same as the peripheral bus via which the data itself is transferred, but in some systems it could involve a different bus, either instead of or additionally to the peripheral bus. Often it is advantageous to transfer DMA commands to the data transfer DMA engine in bursts rather than individually, especially where the communication channel supports a burst transfer mode. In a burst transfer mode, multiple data units can be transferred based on only a single starting address identification because logic on both sides of the communication channel know and agree on how to increment the address automatically for the second and subsequent data units. If the communication bus is shared by other agents, then bursts can be advantageous even if there is no special burst transfer mode because arbitration delays are reduced.

For the same reasons that it is advantageous to offload data transfers to a data transfer DMA engine, it is often advantageous to also offload DMA command transfers to a command transfer DMA engine. The command transfer DMA engine may be the same as or different from the data transfer DMA engine in different embodiments. In order to use a command transfer DMA engine, the processor subsystem creates a DMA command queue in a memory that is accessible to the processor subsystem without crossing the communication channel. Typically the DMA command queue is created in the memory subsystem. The processor subsystem then programs the command transfer DMA engine to transfer one or more DMA commands, across the communication channel, from the queue to a local memory that is accessible to the data transfer DMA engine without again crossing the communication channel. Typically the programming of the command transfer DMA engine includes, among other things, programming in the host memory address from which the first data transfer DMA command is to be read, the address in the local memory to which the first data transfer DMA command is to be written, and an identification of the length of the transfer. The data transfer DMA engine then reads the DMA commands from the local memory and executes them in a known sequence.

One type of peripheral device that often requires the transfer of large amounts of data between the peripheral device and the memory subsystem is a network interface device. Network interface devices were historically implemented on plug-in cards, and therefore are sometimes referred to as network interface cards (NICs). As used herein, though, a NIC need not be implemented on a card. For instance it could be in the form of integrated circuits (ICs) and connectors fitted directly onto a motherboard, or in the form of macrocells fabricated on a single integrated circuit chip with other components of the computer system. Since a NIC will typically both transmit and receive data from a network, the processor subsystem may set up two DMA command queues in the memory subsystem, a transmit (Tx) DMA command queue identifying data buffers in memory ready for transmit onto the network, and a receive (Rx) DMA command queue identifying data buffers in memory that are available to receive data incoming from the network. Since transmit and receive buffers are not typically used at even rates, the NIC's local memory may maintain separate transmit and receive queues as well.

The command transfer DMA engine needs to know both the host memory address from which the first data transfer DMA command is to be read, and the address in the local memory to which the first data transfer DMA command is to be written. If there is only a single DMA command queue and a single local store for storing the retrieved data transfer DMA commands, then the peripheral device need only have storage for two address pointers to implement the retrieval of data transfer commands by DMA: the host memory address from which the first data transfer DMA command is to be read (a read pointer), and the address in the local memory to which the first data transfer DMA command is to be written (a write pointer). The storage space required to implement these two pointers is not a stretch in modern technologies. In the NIC situation described above there are two host memory queues and two local stores for storing retrieved data transfer DMA commands, so in this situation storage for four address pointers is needed.

Some NICs implement multiple, e.g. up to about 8 or 16, physical network ports. For these NICs, it may be desirable to implement a separate pair of queues in host memory for each physical port, and a corresponding pair of local stores for each physical port. In this situation storage for up to about 16 or 32 address pointers might be needed. This requirement is still not exorbitant, but still it would be desirable to reduce the size of this address pointer storage to reduce space utilization if possible.

U.S. patent application No. 11/050,476, filed February 3, 2005, entitled "Interrupt Management for Multiple Event Queues" and U.K. Patent Application No. GB0408876A0, filed April 21, 2004, entitled "User-level Stack", both describe architectures in which the operating system supports numerous protocol stacks, each with its own set of transmit and receive data structures, and all assisted by functions performed in hardware on the NIC. The number of transmit and receive data queues can number in the thousands, with a corresponding number of local stores for storing retrieved data transfer DMA commands. Many thousands of address pointers are required in such an architecture, occupying significant space on an integrated circuit chip. For example, with 4k Tx DMA command queues and 4k Tx DMA command queues, and a corresponding number (8k) local stores for storing retrieved data transfer DMA commands, storage is required on the NIC for 8k read pointers and 8k write pointers. If each local store requires 7 bits to uniquely address each entry (i.e. the store can hold 128 entries), then storage for 56k bits are required just to hold the write pointers.

Transmission Control Protocol (TCP) was designed to operate over a variety of communication links. Advances in different communication mediums, including high-bandwidth links, wireless, fiber-optics networks, and satellite present a situation where there may be an increasingly large discrepancy between the bandwidth capacities of receiving stations. TCP compounds the mismatches between the transmission rate and the various receiving links by sending bursts (or windows) of packets, which affects the throughput, fairness, queue size, and drop rate in network communications.

In a network topology, a transmitting station communicates with multiple receiving stations through different communication links. Different communication links may require different transmission rates beyond which a receiving station will start dropping packets. While TCP can handle packet discard and re-transmission, the result is degradation of the overall system performance. The difference in transmission rate between communication links can be attributed to many factors. For example, the receiving station is located one or more switch or hub away from the transmitting station and may be on a slow link, which can be as slow as half-duplex at 10 Mbps. There may be many-to-one congestion at a particular link, i.e. too many nodes transmitting to the node. The receiving station's TCP stack may not be efficient in handling packets.

A transmit port of a fast NIC is likely to be connected to a fast link and capable of sending packets at much faster rates than some downstream links can process. The Institute of Electrical and Electronic Engineers (IEEE) 802.3x standard specifies a port-based flow control, which works if a switch can support it, to flow the control to the transmitting port. This type of flow control can create head-of-line blocking and causes all nodes receiving from this transmitting port to be slowed down.

US Patent Application Number 2005/0099979 relates to wireless communication devices in a wireless network comprising different types of wireless transmit receive units (WTRUs). The application describes devices comprising a scheduler configured to queue data packets for transmission at rates appropriate to the different types of WTRUs.

There is therefore a need for an improved method for pacing the transmission of packets from a transmitting station to different receiving stations based on the bandwidth of each communication link associated with a particular receiving station, thereby optimizing the performance of the overall network performance.

### SUMMARY OF THE INVENTION

According to an aspect, there is provided a system for pacing transmission from a plurality of transmit queues in a memory of a host computer accessible to a network interface device via a communication bus, the system comprising at the network interface device: a plurality of bins, each bin having a specified pacing threshold; characterized in that the system comprises: a pace table storing pace values for the plurality of transmit queues; a bus interface unit configured to allow the host computer system to write pace values over the communication bus to the pace table for the plurality of transmit queues; a binning controller for assigning queue identifiers of the plurality of transmit queues to the plurality of bins in dependence upon the pace values stored at the pace table; and an output arbiter configured to select queue identifiers from the plurality of bins in accordance with the pacing thresholds of the bins, the queue identifiers identifying transmit queues having data packets for transmission and the bins being accessible to the output arbiter without accessing the communication bus.

According to an aspect, there is provided a method for controlling pacing of a plurality of transmit queues through a network interface device, the plurality of transmit queues being held in a memory of a host computer system accessible to the network interface device via a communication bus, and the method comprising and characterized by: the host computer system writing, by means of a bus interface unit of the network interface device, a first pace value associated with a first one of the transmit queues into a pace table of the network interface device; assigning, in dependence on the first pace value, a queue identifier identifying the first transmit queue to one of a plurality of bins, each bin having a specified pacing threshold; and at the network interface device, selecting queue identifiers from the plurality of bins in accordance with the pacing thresholds of the bins; and on selecting a queue identifier identifying the first transmit queue, the network interface device transmitting one or more data packets from the first transmit queue.

Some embodiments may provide a system and method of a pace engine for governing different transmission rates tailored for different communication links by transmit rate pacing a plurality of queues from a transmit DMA queue manager. The pace engine may include the binning controller for receiving the plurality queue identifiers from the transmit DMA queue manager and determines a pace value containing an inter-packet-gap associated with a particular transmit queue. The binning controller may also calculate the earliest allowed exit time for each queue identifier that is stored and paced in a Fast Bin or a Slow Bin. A queue identifier that has a zero wait time may be transmitted from the binning controller to the Work Bin directly for immediate transmission given that the queue identifier cannot be throttled. A pace table may be coupled to the binning controller, stores information about the pace values containing the minimum inter-packet-gaps for various transmit queues. A timer may be coupled to the binning controller with a multi-bit continuous counter that increments at a predetermined time unit and wraps around after a predetermined amount of time.

The arbiter may include a first multiplexer for arbitrating multiple inputs coupled to the Fast Bin and select a first input having the highest priority to pass through first from the binning controller to the Fast Bin, a second input having the medium priority to pass through second from the binning controller to the Fast Bin, and a third input having the lowest priority to pass through last from the binning controller to the Fast Bin. The arbiter may also include a second multiplexer for arbitrating multiple inputs coupled to the Slow Bin, and select a first input having a first priority to pass through first from the binning controller to the Slow Bin, and a second input having a second priority to pass through second from the binning controller to the Slow Bin. The arbiter may further include a third multiplexer, coupled between the Work Bin, the Fast Bin, and the transmit DMA queue manager, for arbitrating between a first input and a second input for generating a pace engine output to the transmit DMA queue manager.

Broadly stated, a system for pacing transmission of a plurality of transmit queues in a host memory accessible to a network interface device via a communication bus may comprise a plurality of bins; an output arbiter coupled to select one of the bins, in accordance with a bin priority scheme, the bins being accessible by the output arbiter without accessing the communication bus; and a binning controller for assigning data packets from the plurality of transmit queues to the plurality of bins in dependence upon a value of a packet transmit rate parameter associated with the transmit queue from which each data packet is derived.

Advantageously, some embodiments may enhance the overall network performance by classifying and sending queue identifiers to different bins based on a pace value associated with a particular transmit queue. Some embodiments may also advantageously reduce or eliminate many-to-one congestions that may occur at a particular communication link.

The structures and methods regarding to the present invention are disclosed in the detailed description below. This summary does not purport to define the invention. The invention is defined by the claims. These and other embodiments, features, aspects, and advantages of the invention will become better understood with regard to the following description, appended claims and accompanying drawings.

### BRIEF DESCRIPTION OF THE DRAWINGS

The invention will be described with respect to specific embodiments thereof, and reference will be made to the drawings, in which:
Fig. 1 is a simplified architectural diagram illustrating a network topology with mixed transmission rates between a transmission station and receiving stations in accordance with the present invention.
Fig. 2 is a block diagram illustrating a pace engine for spacing out queue identifiers into different bins based on the value of an inter-packet-gap associated with a particular transmit queue in accordance with the present invention.
Fig. 3 is a flow chart illustrating the pace input flow of the pace engine in accordance with the present invention.
Fig. 4 is a flow chart illustrating the process of a transmit DMA queue in accordance with the present invention.
Fig. 5 is a block diagram of data structures illustrating transmit (and receive) queues for different VNICs in accordance with the present invention.
Figs. 6 and 7 are block diagrams illustrating features in a network interface card for implementing the transmit DMA queue manager, the retrieval of transmit DMA descriptors, and the transmit data packets in accordance with the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the scope of the present invention. Thus, the present invention is not intended to be limited to the embodiments shown, but is to be accorded the widest scope consistent with the principles and features disclosed herein.

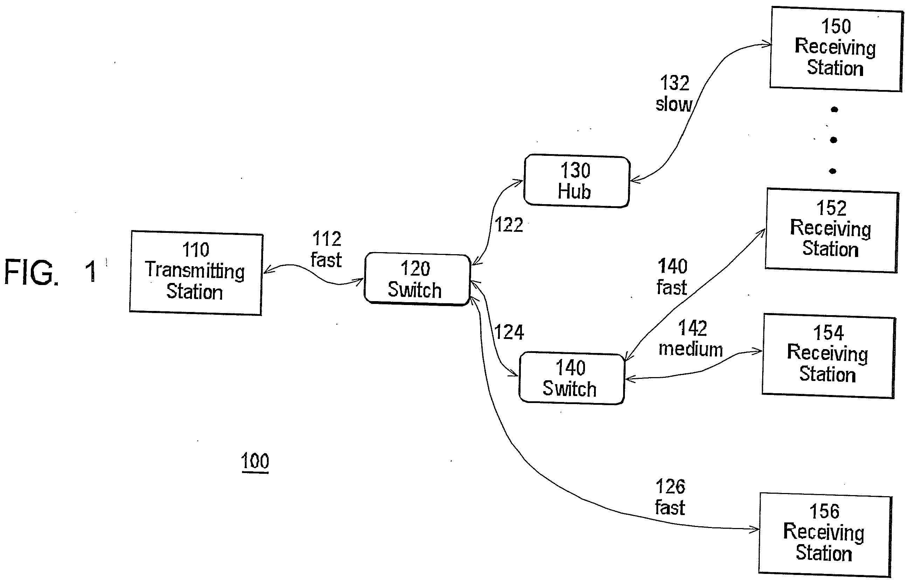

Referring now to Fig. 1, there is shown a simplified architectural diagram illustrating a network topology 100 with mixed transmission rates between a transmitting station 110 and receiving stations 150, 152, 154 and 156. Each of the receiving stations 150, 152, 154 and 156 has a maximum packet rate for receiving packets from the transmitting station 110. For intelligent allocation of network resources, the transmitting station 110 spaces out the rate of packet transmission to a receiving station as a fast rate of packet transmission, a medium rate of packet transmission, or a slow rate of packet transmission as determined by the maximum packet rate for a particular receiving station.

The transmitting station 110 is coupled to a first switch 120 via a fast communication link 112. The first switch 120 is commonly coupled to a hub 130 via a communication link 122 and a second switch 140 via a communication link 124. The hub 130 is coupled to the receiving station 150 via a slow link 132. The second switch 140 is coupled to the receiving station 152 via a fast link 140 and is further coupled to the receiving station 154 via a medium link 142. The first switch 120 is coupled to the receiving station 156 via a fast link 126. The various communication links, including the fast link 112, the medium link 142, and the slow link 131, may be implemented as wireline links, optical links, wireless links, satellite or any other mechanism for communication of information.

The maximum packet rate that a receiving station is able to accept determines whether a communication link will be categorized as a fast link, a medium link or a slow link. The receiving stations 152 and 156 have a maximum packet receiving rate that is considered to be fast, and therefore the communication links 140 and 126 are labeled as fast links. The receiving station 150 has a maximum packet receiving rate that is considered slow, and therefore the communication link 132 is labeled as a slow link. The receiving station 154 has a maximum packet receiving rate that is between fast and slow, which is considered a medium speed, and therefore the communication link 142 is labeled as a medium link.

A network utilization can be significantly improved by pacing packets transmitted from the transmitting station 110 to the receiving stations 150, 152, 154 and 156 based on the maximum packet rate that is permitted at a particular receiving station. If a receiving station receives packets at a rate that exceeds the maximum packet rate, the transmitted packets will not be accepted by the receiving station. The excess packets will be dropped by the receiving station, thereby occupying network resources without effective usage. For optimization of network resources, the transmitting station 110 governs the transmission rate of packets over each communication link 132, 140, 142, or 126 so that the fast links 140 and 126 receive a fast transmission rate of packets to the receiving stations 152 and 156, the slow link 132 receives a slow transmission rate of packets to the receiving station 150, and the medium link 142 receives a medium transmission rate of packets to the receiving station 154.

In one embodiment, the transmit rate pacing is individually determined for each transmit link, as dictated by the maximum packet reception rate of a receiving station. The transmit rate pacing of the present invention can be implemented in either software or hardware. For software-based transmit rate pacing, after sending a packet to hardware, software will need to wait for a predetermined amount of time, e.g. set a timer and wait for the timer to expire, before transmitting another packet. A hardware-based transmit rate pacing eliminates the waiting period between the packets as required by software. Rather, hardware is able to queue all of the packets into hardware in the transmitting station 110 where the hardware spaces out the packets for transmission.

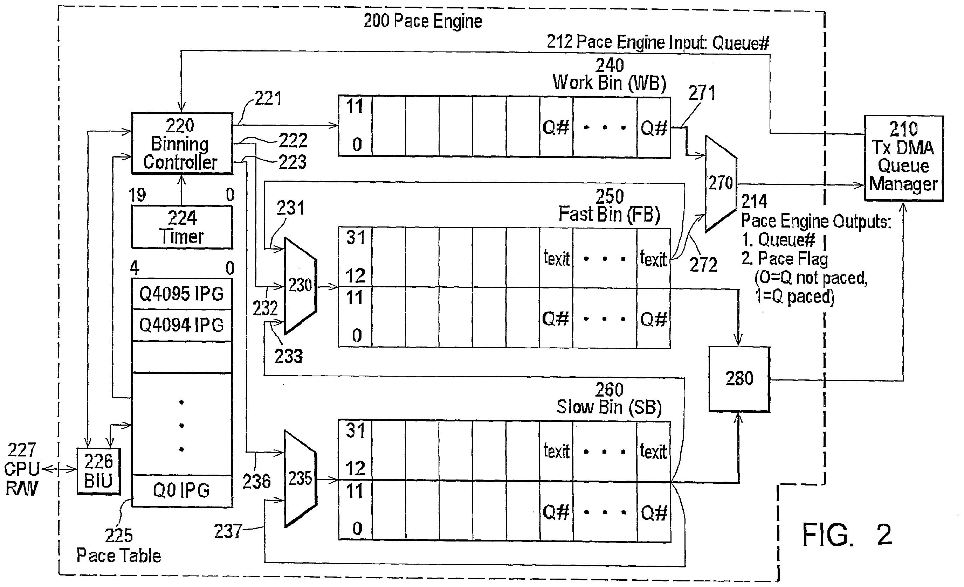

As shown in Fig. 2, there is a block diagram illustrating a pace engine 200 for spacing out queue identifiers into different bins based on an inter-packet-gap associated with a particular transmit queue. The transmit DMA queue manager 210 sends a plurality of queue identifiers to a binning controller 220. The binning controllers classifies the plurality of queue identifiers to either a Work Bin (WB) 240, a Fast Bin (FB) 250, or a Slow Bin (SB) 260 based on a pace value containing an inter-packet-gap associated with a particular transmit queue. Therefore, data packets to be transmitted from the plurality of queue identifiers are spaced out so that those from the highest priority queues are transmitted first, those from the medium priority queues are transmitted second, and those from the lowest priority queues are transmitted last.

In one embodiment, the pace engine 200 typically manages thousands of connections that are mapped into 4K (4096) transmit DMA queues (TxQs). Software running in the host computer has knowledge of the acceptable packet rate for each connection, which can be obtained by analyzing the number of dropped packets and/or by monitoring the arrival rate of responses and acknowledges during operations of a network. Software programs into the NIC pace table 225, a pace value for each of the 4k queues. By default, pace values are set to 0 and queues are not paced.

Some characteristics that are desirable in the implementation of the hardware rate pacing are described as follows. The packet-level flow control should be adequate so that the inter-packet-gap (IPG) is modulated to achieve the right pace. The term "packet-level" means that hardware is not required to break up packets or count bytes for the purpose of rate pacing. One overriding objective is to achieve a minimum inter-packet-gap, although there is no maximum inter-packet-gap constraint. In the event that there are more connections than queues, software is responsible for assigning similar data rate connections to the same Tx queue. Each queue typically has just one pace value.

The pace engine 200 includes two interfaces for external communication. The first interface is for interfacing with a central processing unit (CPU) to program pace values for each transmit queue and other control registers. The second interface is for interfacing with the Tx DMA Queue Manager 210 to obtain a queue identifier (or number) of the pending transmit DMA. The pace engine 200 generates an output to the Tx DMA Queue Manager 210 with the identification of the queue that is ready for the next DMA transmission. A bus interface unit 226 is coupled to a central processing unit 227 for writing to and reading from a pace table 225 and registers. The pace table 225 is able to store K number of entries, e.g. 4,000 entries. Each entry contains a desired minimum IPG for one of the 4,000 transmit queues.

Whenever any of the DMA transmit queues is active, the DMA Queue Manager 210 places an entry into the pace engine 200 before acting on a packet or descriptor. It does so by sending the queue number of the active transmit queue to the binning controller 220. The binning controller 220 detects the value of the inter-packet-gap desired for the DMA channel that is associated with the queue number. The binning controller 220 runs an arbitration scheme to determine whether to route the queue number via a path 221 to the Work Bin 240, via a path 222 to the Fast Bin 250, or via a path 223 to the Slow Bin 260. The binning controller 220 computes an earliest allowed exit time for the queue number being paced, based on the current time value plus the inter-packet gap for the current queue number, and stores the exit time in either the Work Bin 240, the Fast Bin 250, or the Slow Bin 260. A timer 224 is coupled to the binning controller 220 with a 20-bit continuous counter with 1 µs increments and wraps around at 1 second.

Pacing thresholds for the Work Bin 240, the Fast Bin 250, or the Slow Bin 260 can vary depending on a designer's specification. In one embodiment, the Work Bin 240 stores queue identifiers (IDs for queues) that need not be paced. Pacing is not needed when a pace table entry for a queue is 0 or when a queue was previously idle, where the first packet after idle is not paced regardless of pace table value. In one embodiment, three classifications of queue identifiers are used: a first classification that places queue identifiers in the Work Bin 240, a second classification that places queue identifiers in the Fast Bin 250, and a third classification that places queue identifiers in the Slow Bin 260. If a queue identifier has a zero IPG, the binning controller 220 sends the queue identifier to the Work Bin 240 for immediate processing. Effectively, the Work Bin 240 functions like a FIFO buffer. Secondly, the Fast Bin 250 stores queue identifiers for queues allowed to be transmitted in the next N micro seconds (µs), where the parameter N is a programmable value (e.g., 5 µs). If a queue identifier has a non-zero and short IPG, the binning controller 220 sends the queue identifier to the Fast Bin 250. Thirdly, the Slow Bin 260 stores queue identifiers for queues not allowed to be transmitted in the next N µs. If a queue identifier has a non-zero and long IPG, the binning controller 220 sends the queue identifier to the Slow bin 260.

One way to keep track of an entry is by time stamp. Whenever an entry is received, the entry is stamped with a timer 224. The timer can be implemented in a wide variety of ways, such as stamping with a current time. When an entry enters the pace engine 200, the binning controller 220 adds the current time and the IPG to produce the desired exit time associated with the entry. The Work Bin 240 has no desired exit time because an entry into the Work Bin 240 means immediate transmission. Entries in both the Fast Bin 250 and the Slow Bin 260, however, have a desired exit time, denoted by the symbol tₑₓᵢₜ. The desired exit time, tₑₓᵢₜ, refers to the earliest time that the Tx DMA Queue Manager 210 can transmit a packet associated with a queue identifier.

Each multiplexer in a first multiplexer 230 and a second multiplexer 235 acts like an arbitration for different inputs. The first multiplexer 230 and the second multiplexer 235 operate to facilitate the binning algorithm in the arbitration of queues in the Fast Bin 250 and the Slow Bin 260. The binning controller 220 receives a queue identifier that has a zero IPG from the Tx DMA Queue Manager 210. The binning controller 220 transfers the queue identifier via the path 221 to the Work Bin 250. The Work Bin 250 receives the queue identifier that originates from just one source, the Tx DMA Queue Manager 210.

The first multiplexer 230 arbitrates between three inputs, a first input from the path 231, a second input from the path 232, and a third input from the path 233 for generating an output that is coupled to an input of the Fast Bin 250. Among the three inputs into the first multiplexer 230, the first priority is the second input via the path 232 received by the first multiplexer 230 that originates from the Tx DMA Queue Manager 210. The first multiplexer 230 receives the queue identifier from the Tx DMA Queue Manager 210, either because the exit time associated with the entry is more distant than a fast bin threshold but nearer than a slow bin threshold, or because the exit time is nearer than the fast bin threshold but the FIFOs in the Work Bin 240 are full. The second priority comes from the first input via the first path 231 received by the first multiplexer 230 that originates from the Fast Bin 250 which recycles the queue identifier from the head of the Fast Bin 250 back to its tail because the exit time value of the entry is still farther away than a fast bin threshold. The third priority comes from the third input via the third path 233 received by the first multiplexer 230 that originates from the Slow Bin 232 because the exit time value of the entry is nearer than a slow bin threshold.

The second multiplexer 232 arbitrates between the two inputs, a first input from the path 236 and a second input from the path 237, for generating an output that is coupled to an input of the Slow Bin 260. Among the two inputs coupled to the second multiplexer 235, the first priority comes from the first input via the first path 236 received by the second multiplexer 235 that originates from the Tx DMA Queue Manager 210. The second multiplexer 235 receives the entry from the Tx DMA Queue Manager 210, either because an incoming entry has an exit time more distant than a slow bin threshold or because the FIFOs in both the Work Bin 240 and the Fat Bin 250 are full. The second priority comes from the second input via the first second path 237 received by the second multiplexer 230 that originates from the Slow Bin 260 by recycling the entry back into the Slow Bin 250 because its exit time is still more distant than the slow bin threshold.

When the third multiplexer 270 generates an output to the Tx DMA Queue Manager 210, the queue will contain the queue identifier and a pace flag, indicating whether the queue is paced by setting a parameter Q = 0 if the queue is paced, or setting the parameter Q = 1 if the queue is not paced. In one embodiment, the first input 271 from the Work Bin 240 has a higher priority than the second input 272 from the Fast Bin 250. However, as an optional feature, a fairness scheme can be implemented so that periodically queue identifiers from the Fast Bin 250 will be selected by the third multiplexer 270 for sending outputs to the transmit DMA Queue Manager 210 so that queue identifiers in the Fast Bin 250 are not always waiting until the FIFOs in the Work Bin 240 are all cleared before an opportunity to transmit.

Table 1 below briefly summarizes the functional block description in the pace engine 200.

**Table 1**

| Sub-Block | Description |
|---|---|
| BIU | Bus interface unit to allow software running in the host computer system to write and read the pace table and registers. |
| Pace Table | 4K entries containing desired minimum IPG for each of the 4K queues. |
| Timer | 20-bit continuous counter with 1 µsec increments, wraps around at 1 second. |
| Binning Controller | Computes earliest allowed exit time for a queue being paced and stores in the Work Bin, Fast Bin or Slow Bin accordingly. |
| Work Bin | Stores queue identifiers that need not be paced; this can either be when the pace table entry is 0 or when this queue was previously idle (first packet after idle is not paced regardless of pace table value). |
| Fast Bin | Stores queue identifiers allowed to transmit in the next N µsec where N is programmable (e.g. 5 µsec). |
| Slow Bin | Stores queue identifiers not allowed to transmit in the next N µsec. |
| Full Logic | Handles the condition when a queue identifier is either Fast or Slow bin is full. |

Software interface to the pace engine 200 is described below. The term "pace" is defined as time per packet transmitted. In one embodiment, a granularity of 1 µsec per pace unit is used, which is equivalent to 125 byte times in a 1 Gbit/sec. Link, which is time in a reasonable time unit. The pace table is typically accessible by a CHAR driver running in the kernel. In one embodiment, user-level access is not permitted as a security measure to protect the pace table from unauthorized access. In such embodiment where a user does not have access to the pace table, the user makes a system call to a kernel resident device driver, and the kernel writes to the pace table. In another embodiment, user-level access is permitted so that the user-level driver writes directly to the pace table.

If pacing is required for operation with a slow TCP link, the worst IPG that a packet may require is at half-duplex and 10 Mbps with maximum backoff intervals equaling 16 collision retries. The cumulative progressive backoff maximum can be computed as follows: 1 + 2 + 4 + 8 + 16 + 32 + 64 + 128 + 256 + 512 + 1K + 1K + 1K + 1K + 1K + 1K = 7K slot times (one slot is 64 byte times). Therefore, the maximum backoff time is about -360 msec, which requires a 19-bit timer counting at 1 µsec increments. In one embodiment, the pacing is supported up to 1 second.

To save pace table memory space, pace values are stored according to an exponential coding as follows:

| **Pace Table Value** | **Pace IPG** |
|---|---|
| 0 | 2⁰ = 0 µsecond |
| 1 | 2¹ = 2 µsecond |
| 2 | 2² = 4 µsecond |
| ... | ... |
| 19 | 2¹⁹ ≈ 1/2 second |
| 20 | w²⁰20 ≈ 1 second |
| > 20 | Reserved |

Besides programming the pace table, software also typically programs the following parameters. The programming of a binning threshold indicates the control binning into the Fast Bin 250 or the Slow Bin 260. This threshold is sometimes referred to herein as a slow bin threshold. In some embodiments, there may also be a fast bin threshold, programmable or not, to control binning as between the Work Bin 240 and the Fast Bin 250. But in one embodiment, the fast bin threshold is fixed and assumed, so that only queue numbers having an IPG = 0 go into the Work Bin 240. In another embodiment, there may be only two or more of these bins, in which case there may be a corresponding number of fixed or programmable binning thresholds.

The programming of a "bin partition" reflects that the Fast Bin 250 and the Slow Bin 260 share a single dual-port memory to provide flexibility in expanding or shrinking the bin according to the connection profile, which typically cannot be dynamically modified. If a re-partitioning is required, software will execute the following operations: flush all active queues first, modify the partition, reset pace WB, FB and SB pointers, and re-start Tx DMA.

For user level queues, the location in the NIC where its IPG is stored is memory mapped into the memory space of that user level driver so that the user writes a modified IPG value without going through the Kernel. One reason that software changes the IPG is that the user-level stack follows a standard algorithm (e.g. TCP) for that particular connection.

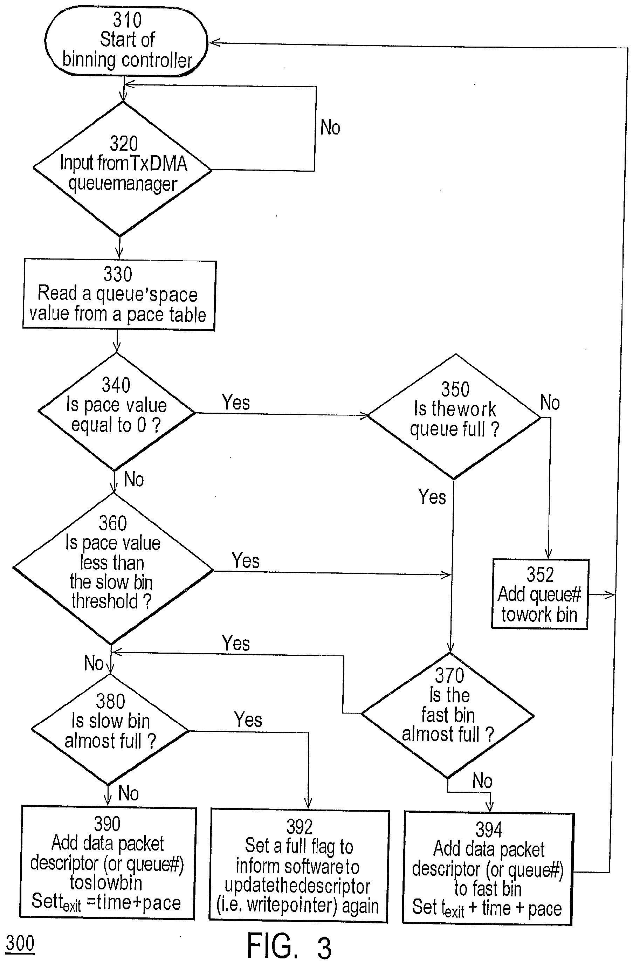

Turning now to Fig. 3, there is shown a flow chart illustrating the process 300 of the pace input flow. The binning controller 200 computes the earliest allowed exit time, tₑₓᵢₜ, for each queue identifier and stores the value of each exit time in the Work Bin 240, the Fast Bin 250 or the Slow Bin 260 accordingly. The process 300 starts at step 310 of the decision-making process in the operational flow of the binning controller 200. At step 320, the process 300 updates a descriptor queue write pointer to the Tx Queue Manager 210. The Tx Queue Manager 210 monitors the descriptor queue write pointers such that if there is work to perform, the Tx Queue Manager 210 generates an output with an entry containing the queue identifier to the pace engine 200. There is no work to be done if the descriptor queue is empty, in which the Tx DMA Queue Manager 210 waits for an entry in the descriptor queue.

At step 330, the process 300 retrieves the pace value associated with a transmit queue of a queue identifier from the pace table 225. The queue identifier is added to a FIFO in either the Work Bin 240, the Fast Bin 250 or the Slow Bin 260 based on the pace value. Non-paced queues are added to the Work Bin 240 unless the Work Bin 240 is full, in which case it overflows into the Fast Bin 250. If the pace value for the queue identifier is less than a slow bin threshold, the binning controller 220 sends the queue identifier to the Fast Bin 250. If the pace value for the queue identifier is greater than the slow bin threshold, the binning controller 220 sends the queue identifier to the Slow Bin 260. If the Slow Bin 260 or the Fast Bin 250 is determined to be almost full, a full flag is set to inform the process 300 that it needs to update the descriptor write pointer. In addition to the queue identifier, an earliest exit time entry is also added to the Fast Bin 250 and the Slow Bin 260. The earliest exit time is obtained by adding the pace value to the current time provided by the timer 224. When an entry is exiting a bin in either the Fast Bin 250 or the Slow Bin 260, the current time at the time of exit is compared with the recorded earliest exit time, tₑₓᵢₜ.

At step 340, the process 300 determines whether the pace value is equal to zero. If the pace value is equal to zero, the process 300 proceeds to step 350 to determine whether the Work Bin 240 is full. If the Work Bin 240 is not yet full, the process 300 adds a queue number to the Work Bin. If the pace value is not equal to zero, the process 300 proceeds to determine whether the pace value is less than the threshold of the Fast Bin 250 at step 360.

In both scenarios where the Work Bin 240 is full and where the pace value is less than the slow bin threshold, the process 300 proceeds to determine whether the Fast Bin 250 is almost full at step 370. If the Fast Bin 250 is not almost full, the process 300 at step 394 adds a queue number to the Fast Bin 250, and sets the parameter, tₑₓᵢₜ, equal to the current time plus the pace value. The process 300 then returns to the start of the binning controller at step 310. The Work Bin 240 and the Fast Bin 250 are both allowed to exit the pace engine 200. The Work Bin 240 is allowed to exit unconditionally, while the Fast Bin 250 is allowed to exit when the earliest exit time has passed. A reasonable algorithm can be used to arbitrate between the two exits, as transmitted from the Work Bin 240 and the Fast Bin 250. When a fast bin exit entry has not met the earliest exit time criteria, the entry is recycled back to the Fast Bin 250.

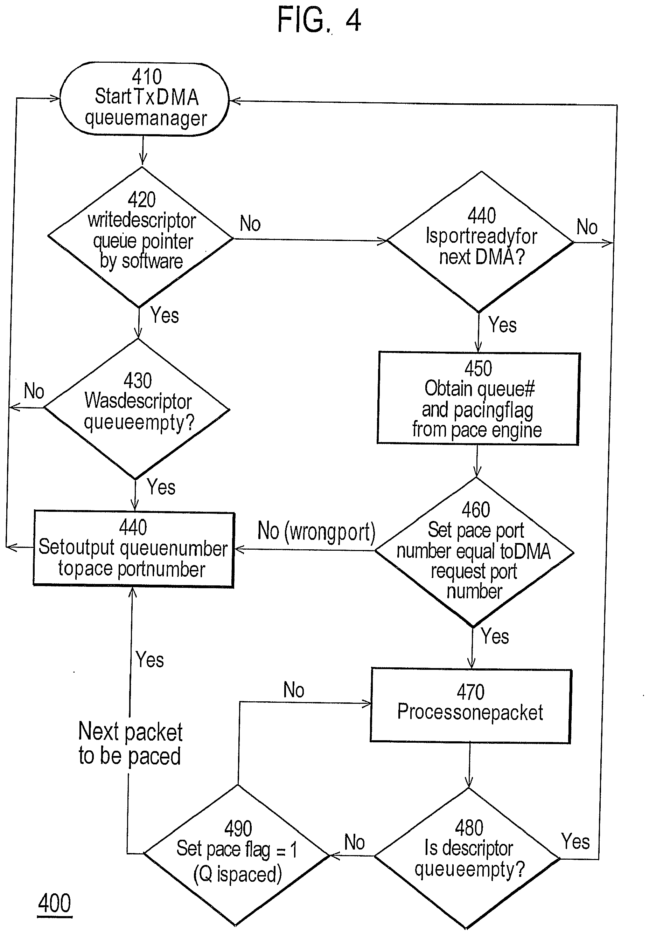

If the pace value is not less than the slow bin threshold, at step 380, the process 300 proceeds to determine whether the Slow Bin 260 is almost full. At step 390, the process 300 adds a queue number to the Slow Bin 260 by setting the parameter tₑₓᵢₜ equal to the current time plus the pace value if the Slow Bin 260 is not almost full. At step 392, the process 300 sets a full flag to inform software to update the descriptor (i.e., a write pointer) again if the Slow Bin 260 is almost full. When an entry has an earliest exit time that is within a programmable binning threshold, the entry from the Slow Bin 260 can be upgraded to the Fast Bin 250. If the entry is not upgraded, the entry is recycled back to the Slow Bin 260. The output controller keeps sorting and recycling continuously through the Fast Bin 250 and the Slow Bin 260 to avoid the situation of some ready-to-exit queues being stuck in the respective Fast and Slow bins 250, 260. When a queue exits the pace engine 200, the transmit DMA Queue Manager 210 processes the queue identifier according to the flow as described with respect to Fig. 4.

In Fig. 4, there is a flow chart illustrating the process 400 of a transmit DMA Queue Manager that has two ports. At step 410, the transmit DMA Queue Manager 210 starts by receiving a queue identifier from the pace engine 200. In one embodiment, the pace engine 200 does not distinguish between the 2 transmit ports at the transmit DMA Queue Manager 210. At step 420, software writes the descriptor queue pointer. At step 430, the Tx DMA Queue Manager 210 determines if a port is ready to perform the next DMA operation. If the port is not yet ready, the process 400 returns to step 410. When the queue exits the pace engine 200 but that particular port is not yet ready, the queue is recycled back to the pace engine 200. At step 450, the Tx DMA Queue Manager obtains the queue number and pacing flag from the pace engine 200. At step 460, the Tx DMA sets a pace port number equal to a DMA request port number. If the pace port number matches the DMA request port number, the Tx DMA manager 210 processes one packet if the queue is not paced at step 470. If the pace port number does not match the DMA request port number, the Tx DMA Queue Manager 210 proceeds to step 440. If the queue is paced and there are multiple packets to transmit, after DMA each packet, the queue ID is returned to the pace engine 200 to be paced again. If the queue is not paced and there are multiple packets to transmit, the Tx Queue Manager 210 will process all of the packets in the queue. If the descriptor queue is empty at step 480, the process 400 returns to step 410. If the descriptor queue is not empty, at step 480, the pace flag sets to a value of 1. If the queue is not paced, the process 400 goes back to step 470 to process one packet at a time. If the queue is paced, the process 400 continues to step 400 to set the output queue number to the pace port number.

At step 430, if the descriptor queue is empty, the process 400 returns to step 410. However, if the descriptor queue is not empty, the process 400 proceeds to step 440 to set an output queue number equal to the pace port number. The process 400 then returns to step 410 at the start of the Tx DMA Queue Manager.

In an alternative embodiment, the Tx DMA Queue Manager 210 has two output queues, a first queue for the port 0 and a second queue for the port 1, where the designation between the port 0 and the port 1 is encoded with a single bit.

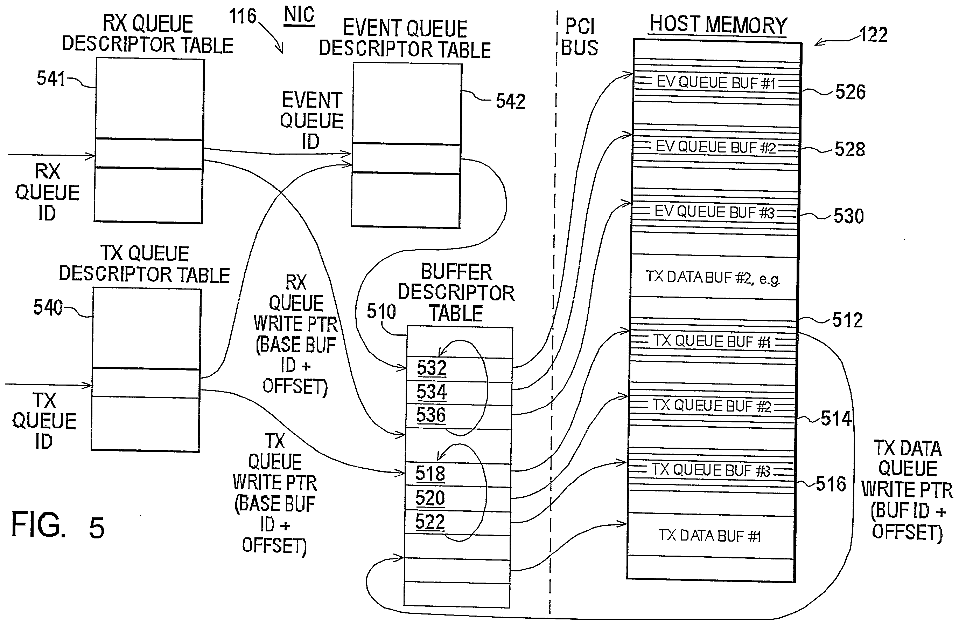

As illustrated in Fig. 5, there is shown a block diagram of data structures illustrating transmit (and receive) queues. The diagram indicates which structures exist in a host memory (not shown) and which exist on a NIC (not shown). The transmit and receive data buffers, the transmit and receive DMA descriptor queues, as well as one or more event queues, are all resident in the host memory and made up of generalized buffers which can be discontiguous and interspersed with each other in the host memory. In Fig. 5, the buffers being used as transmit data buffers are identified as "TX DATA BUF #n", and the buffers being used for a TX DMA command queue (or more simply, a transmit queue) are identified as "TX QUEUE BUF #n". The buffers being used for the event queue are identified as "TX EV QUEUE BUF #n". Additional buffers in the host memory, not shown explicitly in Fig. 5, are used for receive data buffers and for a RX DMA command queue (also called simply a receive queue). One process running on the host system may have any number of transmit, receive and event queues, and all of them share the pool of generalized buffers that have been mapped into that process's virtual address space. Other processes uses a different pool of generalized buffers mapped into their respective virtual address spaces.

Individual buffers may be either 4k or 8k bytes long in one embodiment, and they are chained together into logically contiguous sequences by means of physically contiguous descriptors in a buffer descriptor table 510 stored in the NIC. For example, one transmit queue might occupy buffers 512, 514 and 516 in the host memory, which are discontiguous and possibly out-of-order regions of memory. They are chained together into a single logically contiguous space by the physically contiguous entries 518, 520 and 522 in the buffer descriptor table 510. The entries 518, 520 and 522 are written and managed by the host 114 and are viewed as a wrap-around ring. So for example, if the host wishes to define a transmit queue having 64k entries for transmit data buffer descriptors, and each buffer is 4k in size, then the host will allocate a physically contiguous sequence of 16 entries in buffer descriptor table 510 for this transmit queue. Similarly, one event queue might occupy buffers 526, 528 and 530 in the host memory. These buffers are discontiguous and possibly out-of-order in host memory, but are chained together into a single logically contiguous wrap-around space by the physically contiguous entries 532, 534 and 536 in the buffer descriptor table 510. The buffer descriptor table 510 is indexed by "buffer ID", and each of its entries identifies, among other things, the base address of the corresponding buffer in host memory 122.

In order to keep track of the state of each of the transmit, receive and event queues for the many user-level applications that might be in communication with the NIC at the same time, the NIC includes a transmit queue descriptor table 540, a receive queue descriptor table 541, and an event queue descriptor table 542. The transmit, receive and event queue descriptor tables are shown in Fig. 5 as separate tables, each containing the entire table, but it will be appreciated that in different embodiments the three tables can be implemented as a single unified table, or one of the tables can be implemented as separate sub-tables (divided by columns or by rows or by both), or some combination of these variations might be implemented. Each transmit queue has a corresponding transmit queue ID, which is used as an index into the transmit queue descriptor table 540. The designated entry in the transmit queue descriptor table 540 is the starting point for describing the state and other characteristics of that particular transmit queue, as viewed by the NIC. Each such entry identifies, among other things:
* whether the queue is a kernel queue, user queue or another kind of queue;
* the size of the queue (number of transmit data buffer descriptors it can contain)
* the ID of the event queue associated with this transmit queue;
* buffer ID of base buffer for this transmit queue;
* "device centric" read and write pointers into this transmit queue.

A host (not shown) maintains "host centric" versions of the read and write pointers as well, and when it is ready to have transmit data transmitted, it so notifies the NIC by writing its updated host centric transmit queue write pointer into a "doorbell" address on the NIC of the device centric transmit queue write pointer for the particular transmit queue. This is the trigger used by the Tx DMA Queue Manager 210 to write an entry into the pace engine 200. The NIC maintains a table relating to the doorbell address to the queue number, and the Tx DMA Queue Manager 210 refers to this table to obtain the queue number.

Queue numbers exiting the pace engine 200 are used to select the next transmit queue from which a packet will be retrieved from host memory for transmission. In order to retrieve current transmit data from a particular transmit queue in the host memory, the NIC first uses the ID of the particular transmit queue to look up, in the transmit queue descriptor table 540, the buffer ID of the base buffer containing the transmit descriptor queue. The NIC also obtains from the same place, the current device centric read pointer into that transmit descriptor queue. It then uses the base buffer ID as a base, and the device centric read pointer high order bits as an offset, into the buffer descriptor table 510, to obtain the base address in the host memory of the buffer that contains the particular transmit queue. The NIC then uses that base address as a base, and as an offset the device centric transmit queue read pointer low order bits times the number of bytes taken up per descriptor, as a starting host memory address for retrieving entries from the particular transmit descriptor queue. Importantly, the NIC does not allocate separate space for maintaining a write pointer into any local cache into which these entries will be written.

Each entry in the particular transmit descriptor queue contains, among other things:
* the buffer ID of a transmit data buffer;
* a byte offset into the transmit data buffer; and
* a number of bytes to be transmitted from that transmit data buffer.

The NIC then uses the buffer ID of the current transmit data buffer as another index into buffer descriptor table 510 to retrieve the buffer descriptor for the buffer that contains the current transmit data. Note this buffer descriptor is an individual entry in buffer descriptor table 510; unlike the descriptors for buffers containing transmit queues or transmit event queues, this buffer descriptor is not part of a ring. The NIC 116 obtains the physical address in host memory 122 of the current transmit data buffer, and then using that physical address as a base, and the byte offset from the transmit descriptor queue entry as an offset, it determines the physical starting address in host memory 122 of the current data to be transmitted.

The transmit queue descriptor table 540 entry designated by the transmit queue ID, as previously mentioned, also contains the ID of the transmit event queue associated with the particular transmit queue. Similarly, the receive queue descriptor table 541 entry designated by the receive queue ID contains the ID of the event queue associated with the particular receive queue. All of the event queues for all the applications are described by respective entries in the event queue descriptor table 542. The entry in the event queue descriptor table 542 identified by a queue ID from the transmit or receive queue descriptor table 540 or 541 is the starting point for describing the state and other characteristics of that particular event queue, as viewed by the NIC 116.

Note that as illustrated in Fig. 5, whereas each slot (e.g. 532, 534, 518) shown in the buffer descriptor table 510 represents a single descriptor, each slot (e.g. 526, 528, 514) in the host memory represents a memory "page" of information. A page might be 4k or 8k bytes long for example, so if a transmit data buffer descriptor in a transmit queue occupies either 4 or 8 bytes, then each slot 512, 514 or 516 as shown in Fig. 5 might hold 512, 1k or 2k transmit data buffer descriptors.

Figs. 9 and 10 are block diagrams illustrating features in a network interface card for implementing the transmit DMA Queue Manager, the retrieval of transmit DMA descriptors, and the transmit data packets. The hardware of Figs. 9 and 10 includes an individual transmit DMA engine descriptor cache 610 corresponding to each individual one of the transmit queues described in a transmit queue descriptor table (not shown). If the NIC supports up to 4k transmit queues, for example, then there are 4k transmit DMA engine descriptor caches 610. But for simplicity of illustration, only one such cache 610 is shown in the drawing. In one embodiment these caches are implemented as separate memory arrays, whereas in another embodiment they are implemented as separate regions of one or more combined memory arrays. These caches 610 maintain in essence a "jumping window" into the transmit DMA descriptors in the particular transmit queue. Each transmit DMA engine descriptor cache may include space for a number of descriptors, which may for example be on the order of 8-128 descriptors depending on the embodiment an depending on the size of each descriptor. The NIC may need only one descriptor at any particular time, but maintaining a cache of descriptors improves pipelining, and also permits the NIC to take advantage of burst transfer protocols on a PCI bus 118 for retrieving transmit DMA descriptors.

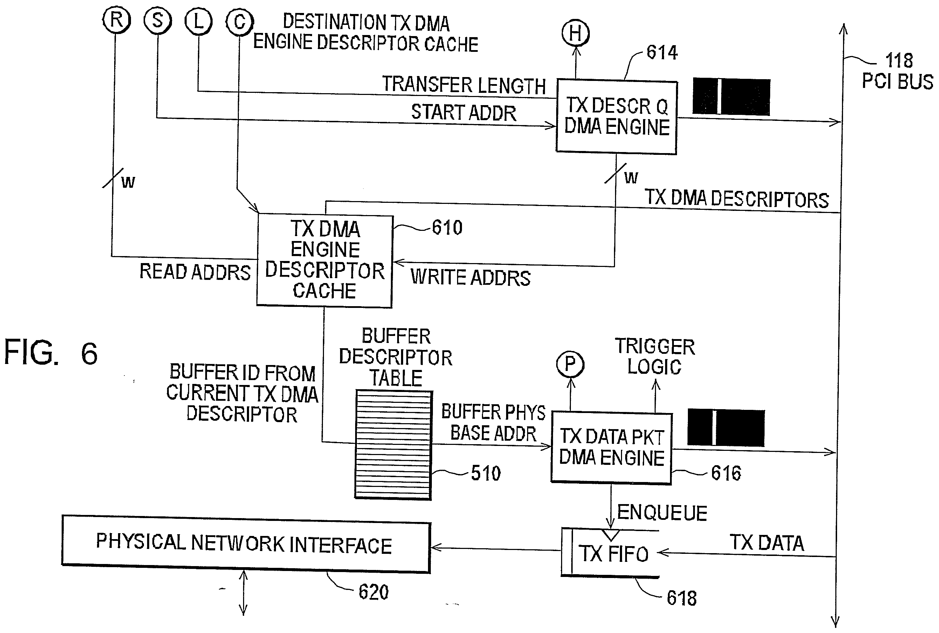

The hardware further includes a transmit descriptor retrieval work queue 612, into which DMA instructions are written for the retrieval of transmit DMA descriptors. The descriptors in the transmit descriptor retrieval work queue 612 are provided to a transmit descriptor DMA engine 614, which controls the DMA retrieval of one or more transmit DMA descriptors into the transmit DMA engine descriptor cache 610. The hardware further includes a transmit data packet DMA engine 616, which controls the retrieval of actual transmit data from a host memory into a transmit FIFO 618. Data packets at the head of the transmit FIFO 618 are driven onto a network by a physical network interface 620. Not shown in Figs. 5 and 6 is an arbiter for arbitrating control of a bus among the transmit descriptor queue DMA engine 614 and the transmit data packet DMA engine 616, as well as a receive descriptor queue DMA engine and a receive data packet DMA engine, as well as other agents not shown.

In general operation, trigger logic and 622, in response to particular triggers such as the exiting of a transmit queue ID from the pace engine 200, selects a particular transmit queue ID from which transmit DMA descriptors are to be retrieved the next. The transmit queue ID identifies a corresponding individual entry in the transmit queue descriptor table, a portion of which is reproduced as entry 624 in Fig. 6. It can be seen that among other things, the transmit queue descriptor table includes a field 626 identifying the type of the queue. In an embodiment, a transmit queue may be a kernel queue, a user queue or another kind of queue. The transmit queue descriptor table entry 624 also includes a queue size field 628 which indicates the number of descriptors that the particular transmit queue can contain. Descriptors are of different sizes depending on the queue type, so the length of the queue in bytes depends on both the queue type field 626 and the queue size field 628.

The transmit queue descriptor table entry 624 also includes a field 630 containing the base buffer ID of the queue. A complete transmit queue can span multiple buffers in a host memory. The buffer size is usually selected to be equal to the page size of the memory. The buffers containing a transmit queue need not be contiguous in the host memory, as previously explained, as long as they are given consecutive buffer ID's. As described above, the buffer descriptor table 510 in the NIC performs a translation between buffer ID's and buffer physical base addresses.

The transmit queue descriptor table entry 624 also includes a field 632 for containing a device-centric copy of the software write pointer into the transmit queue. Whenever the driver that owns a particular transmit queue has one or more transmit data buffers ready to transmit, it writes the transmit DMA descriptors into the transmit queue in host memory and copies its updated transmit queue write pointer into this field 632 of the entry 624 of the transmit queue descriptor table. The address of field 632 is the "doorbell" address referred to above.

The transmit queue descriptor table entry 624 also includes a field 634 for containing a device-centric read pointer into the transmit queue in host memory 222. This pointer indicates an offset to the most recent transmit descriptor in the transmit queue in host memory that has been read into the NIC 216. As described in more detail hereinafter, this hardware read pointer 634 is also used to derive a write pointer into the transmit DMA engine descriptor cache 610, thereby conserving space on the integrated circuit chip. The transmit queue descriptor table entry 624 also includes a cache read pointer 636, which is used as a read pointer into the transmit DMA engine descriptor cache 610.

When an entry 624 in the transmit queue descriptor table is selected, the NIC determines the starting physical memory address from which to retrieve transmit descriptors by incrementing the value in the hardware read pointer field 634 by one (via incrementer 638), and then concatenating low order bits of the incremented hardware read pointer 634 as low order bits of the starting address, to the buffer physical base address as high order bits. It will be convenient to think of the hardware read pointer 634 as having n high order bits followed by m low order bits, the m low order bits of the incremented hardware read pointer 634 being the ones that are concatenated as low order bits of the starting address.

The starting physical memory address determined in this matter is later multiplied by the number of bytes in each transmit descriptor when it is required to specify the byte address. The buffer physical base address is the address read out from the buffer descriptor table 510 at a location identified by a provided buffer ID, which is constructed using the queue base buffer ID 630 as high order bits, and the high order n bits of the incremented hardware read pointer 634 as low order bits.

The buffer physical base address identifies the base physical address of the current buffer of transmit queue entries. The m low order bits of the incremented hardware read pointer 634 can be thought of as an offset into the current memory buffer. Since the high order bits of the incremented hardware read pointer 634 form low order bits of the buffer ID provided to the buffer descriptor table 510, it can be seen that the incrementing of the hardware read pointer 634 by incrementer 638 may cause the buffer ID to also increment. This will change the buffer physical base address output of the buffer descriptor table 510 to that of the next chained buffer of transmit queue entries. Additionally, since incrementer 638 has a fixed number of bits, buffer usage will eventually wrap around and begin again at the beginning of the first buffer in the chain. That is, the incrementer 638 increments "modulo" the length of the buffer chain. Incrementer 638 is sometimes referred to herein for that reason as a "modulo-incrementer".

The starting physical memory address determined as above is provided as part of a transmit descriptor retrieval instruction, into the transmit descriptor retrieval work queue 612. Another field of the instruction is the transfer length L, which is provided by the trigger logic 622. Yet another field of the instruction identifies the destination transmit DMA engine descriptor cache C into which the retrieved transmit descriptors will be written. C is derived from the transmit queue ID, i.e. not provided by the transport library running in the host, since each transmit queue has a respective corresponding transmit DMA engine descriptor cache. When a transmit descriptor retrieval instruction is ready, it is enqueued into the transmit descriptor retrieval work queue 612 in response to a signal from the trigger logic 622.

From the instruction at the head of the transmit descriptor retrieval work queue 612, the starting address S and transfer length L are provided to the transmit descriptor queue DMA engine 614 and the destination transmit DMA engine descriptor cache identifier C is provided to select the appropriate cache 610 into which the descriptors will be written. The DMA engine 614, after arbitrating for control of the bus, controls the DMA transfer of the descriptors from the current host memory buffer into the designated transmit DMA engine descriptor cache 610.

At the end of the transfer, the transmit descriptor queue DMA engine 614 writes an updated hardware read pointer value into the hardware read pointer field 634 of the current entry 624 of the transmit queue descriptor table 540. The low order m bits of this value represent both the offset into the last entry of the host memory transmit queue that has been read into the cache 610, and also the address in the transmit DMA engine descriptor cache 610 at which such last retrieved entry was written. Storage for these two pointers is combined into a single field, thereby saving significant space on the integrated circuit chip.

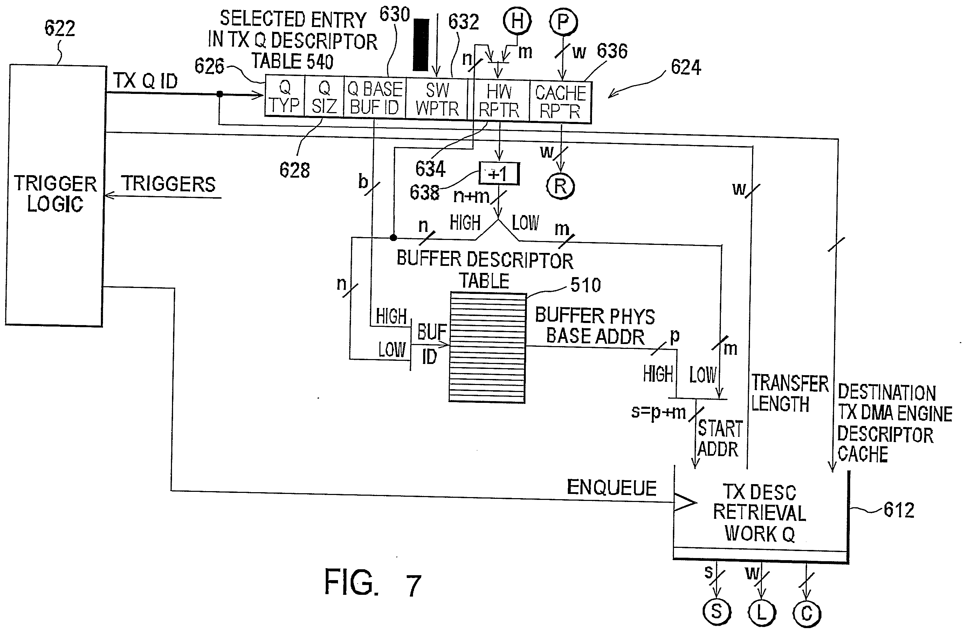

Transmit DMA descriptors are read out of the transmit DMA engine descriptor cache 610 in accordance with a w-bit read address R, stored in the cache read pointer field 636 of the selected entry 624 of the transmit queue descriptor table 540. Each transmit DMA descriptor identifies the buffer ID of the buffer in host memory 222 containing the transmit data. As shown in Fig. 7, this buffer ID is provided to the buffer descriptor table 510 (repeated in Fig. 7 for simplicity of illustration), and the corresponding buffer physical base address is read out and provided to the transmit data packet DMA engine 616 for retrieving transmit data packets. The DMA engine 616 provides physical addresses via an arbiter (not shown) onto the bus 118 for retrieving the transmit data. Retrieved transmit data is written into the tail of transmit FIFO 618, in response to an enqueue signal from the transmit data packet DMA engine 616. Data packets from the head of the transmit FIFO 618 are provided to physical network interface 620, and from there are driven out onto the network 112.

The foregoing description of preferred embodiments of the present invention has been provided for the purposes of illustration and description. It is not intended to be exhaustive or to limit the invention to the precise forms disclosed. For example, although the pace engine 200 and the input pacing flow 300 are illustrated for pacing packets, the present invention can be applied in a wide variety of technical and commercial applications which require handling of prioritizing tasks. Obviously, many modifications and variations will be apparent to practitioners skilled in this art.

The embodiments described herein were chosen and described in order to best explain the principles of the invention and its practical application, thereby enabling others skilled in the art to understand the invention for various embodiments and with various modifications as are suited to the particular use contemplated. It is intended that the scope of the invention be defined by the following claims

## Claims

1. A system for pacing transmission from a plurality of transmit queues in a memory of a host computer accessible to a network interface device (116) via a communication bus (118), the system comprising at the network interface device:
a plurality of bins (240, 250, 260), each bin having a specified pacing threshold;
**characterized in that** the system comprises:
a pace table storing pace values for the plurality of transmit queues;
a bus interface unit (226) configured to allow the host computer system to write pace values over the communication bus to the pace table for the plurality of transmit queues;
a binning controller (220) for assigning queue identifiers of the plurality of transmit queues to the plurality of bins in dependence upon the pace values stored at the pace table; and
an output arbiter (230, 235, 270, 280) configured to select queue identifiers from the plurality of bins in accordance with the specified pacing thresholds of the bins, the queue identifiers identifying transmit queues having data packets for transmission and the bins being accessible to the output arbiter without accessing the communication bus.

2. A system as claimed in claim 1, wherein, for user-level transmit queues, the host computer system is configured to write pace values into the pace table without going through the kernel.

3. A system as claimed in claim 2, wherein the host computer system is configured to write a pace value into the pace table for a user-level transmit queue by means of a memory mapping between the respective entry in the pace table and the address space of a user-level driver.

4. A system according to any preceding claim, wherein the plurality of bins comprises a work bin in which the binning controller assigns to the work bin all the data packets from the transmit queue associated with a first inter-packet-gap that is less than or equal to a first threshold.

5. A system according to claim 4, wherein the plurality of bins comprises a fast bin in which the binning controller assigns to the fast bin all data packets from the transmit queue associated with a second inter-packet-gap that is less than or equal to a second threshold but greater than the first threshold.

6. A system according to claim 5, wherein the plurality of bins comprises a slow bin wherein the binning controller assigns to the slow bin all data packets from the transmit queue associated with a third inter-packet-gap that is less than or equal to a third threshold but greater than the second threshold.

7. A system according to claim 6, wherein the output arbiter comprises a first multiplexer for arbitrating between a first input and a second input, and having an output to the fast bin, the first multiplexer having the first input for receiving the data packets from the binning controller, the second input for receiving the data packets from an output of the fast bin, and a third input for receiving the data packets that have been upgraded from the slow bin.

8. The system of claim 7, wherein the second input of the output arbiter receives the data packets from the output of the fast bin that are recycled back to the fast bin.

9. A system according to claim 7 or 8, wherein the output arbiter comprises a second multiplexer for arbitrating between a first input and a second input, and having an output coupled to the slow bin, the second multiplexer having the first input for receiving the data packets from the binning controller, and the second input for receiving the data packets from an output of the slow bin which recycles the data packets back into the slow bin.

10. The system of claim 9, wherein the second input of the output arbiter receives the data packets from the output of the slow bin that are recycled back to the slow bin.

11. A system according to claim 9 or 10, wherein the output arbiter comprises a third multiplexer having a first input coupled to an output of the work bin, a second input coupled to an output of the fast bin, and an output coupled to a transmit DMA queue manager configured to retrieve data packets from the transmit queues identified by the queue identifiers.

12. A system according to any preceding claim, wherein the pace value associated with each transmit queue indicates a minimum inter-packet-gap for data packets derived from the transmit queue.

13. A method for controlling pacing of a plurality of transmit queues through a network interface device (116), the plurality of transmit queues being held in a memory of a host computer system accessible to the network interface device via a communication bus (118), and the method comprising and **characterized by**:
the host computer system writing, by means of a bus interface unit (226) of the network interface device, a first pace value associated with a first transmit queue of the plurality of transmit queues into a pace table of the network interface device;
assigning, in dependence on the first pace value, a queue identifier identifying the first transmit queue to one of a plurality of bins (240, 250, 260), each bin having a specified pacing threshold; and
at the network interface device, selecting queue identifiers from the plurality of bins in accordance with the specified pacing thresholds of the plurality of bins; and
on selecting the queue identifier identifying the first transmit queue, the network interface device transmitting one or more data packets from the first transmit queue.

## Patentansprüche

1. System zum Regulieren des Takts von Sendungen von mehreren Sendewarteschlangen in einem Speicher eines Host-Computers, der für ein Netzwerkschnittstellengerät (116) über einen Kommunikationsbus (118) zugänglich ist, wobei das System an dem Netzwerkschnittstellengerät Folgendes umfasst:
mehrere Bins (240, 250, 260), wobei jeder Bin eine vorgegebene Taktschwelle hat;
**dadurch gekennzeichnet, dass** das System Folgendes umfasst:
eine Takttabelle, die Taktwerte für die mehreren Sendewarteschlangen speichert;
eine Busschnittstelleneinheit (226), konfiguriert zum Zulassen, dass das Host-Computersystem Taktwerte über den Kommunikationsbus auf die Takttabelle für die mehreren Sendewarteschlangen schreibt;
eine Binning-Steuerung (220) zum Zuordnen von Warteschlangenkennungen der mehreren Sendewarteschlangen auf die mehreren Bins gemäß den in der Takttabelle gespeicherten Taktwerten; und
einen Ausgabe-Arbiter (230, 235, 270, 280), konfiguriert zum Auswählen von Warteschlangenkennungen aus den mehreren Bins gemäß den vorgegebenen Taktschwellen der Bins, wobei die Warteschlangenkennungen Sendewarteschlangen mit Datenpaketen zur Übertragung identifizieren und die Bins für den Ausgabe-Arbiter zugänglich sind, ohne auf den Kommunikationsbus zuzugreifen.

2. System nach Anspruch 1, wobei das Host-Computersystem für Sendewarteschlangen auf Benutzerebene zum Schreiben von Taktwerten in die Takttabelle konfiguriert ist, ohne durch den Kernel zu gehen.

3. System nach Anspruch 2, wobei das Host-Computersystem zum Schreiben eines Taktwertes in die Takttabelle für eine Sendewarteschlange auf Benutzerebene mittels Speicher-Mappings zwischen dem jeweiligen Eintrag in der Takttabelle und dem Adressraum eines Treibers auf Benutzerebene konfiguriert ist.

4. System nach einem vorherigen Anspruch, wobei die mehreren Bins einen Arbeitsbin umfassen, in dem die Binning-Steuerung dem Arbeitsbin alle Datenpakete aus der Sendewarteschlange zuordnet, assoziiert mit einer ersten Inter-Paket-Lücke, die gleich oder kleiner ist als eine erste Schwelle.

5. System nach Anspruch 4, wobei die mehreren Bins einen schnellen Bin umfassen, in dem die Binning-Steuerung dem schnellen Bin alle Datenpakete aus der Sendewarteschlange zuordnet, assoziiert mit einer zweiten Inter-Paket-Lücke, die gleich oder kleiner als eine zweite Schwelle, aber größer als die erste Schwelle ist.

6. System nach Anspruch 5, wobei die mehreren Bins einen langsamen Bin umfassen, wobei die Binning-Steuerung dem langsamen Bin alle Datenpakete aus der Sendewarteschlange zuordnet, assoziiert mit einer dritten Inter-Paket-Lücke, die gleich oder kleiner als eine dritte Schwelle, aber größer als die zweite Schwelle ist.

7. System nach Anspruch 6, wobei der Ausgabe-Arbiter einen ersten Multiplexer zum Arbitrieren zwischen einem ersten Eingang und einem zweiten Eingang umfasst, mit einem Ausgang zum schnellen Bin, wobei der erste Ausgang des ersten Multiplexers zum Empfangen der Datenpakete von der Binning-Steuerung dient, der zweite Eingang zum Empfangen der Datenpakete von einem Ausgang des schnellen Bin dient und ein dritter Eingang zum Empfangen der Datenpakete dient, die vom langsamen Bin aufgewertet wurden.

8. System nach Anspruch 7, wobei der zweite Ausgang des Ausgabe-Arbiters die Datenpakete vom Ausgang des schnellen Bin empfängt, die zum schnellen Bin zurückgeführt werden.

9. System nach Anspruch 7 oder 8, wobei der Ausgabe-Arbiter einen zweiten Multiplexer zum Arbitrieren zwischen einem ersten Eingang und einem zweiten Eingang umfasst und einen mit dem langsamen Bin gekoppelten Ausgang hat, wobei der erste Eingang des zweiten Multiplexers zum Empfangen der Datenpakete von der Binning-Steuerung dient und der zweite Eingang zum Empfangen der Datenpakete von einem Ausgang des langsamen Bin dient, der die Datenpakete in den langsamen Bin zurückführt.

10. System nach Anspruch 9, wobei der zweite Eingang des Ausgabe-Arbiters die Datenpakete vom Ausgang des langsamen Bin empfängt, die zum langsamen Bin zurückgeführt werden.

11. System nach Anspruch 9 oder 10, wobei der Ausgabe-Arbiter einen dritten Multiplexer mit einem mit einem Ausgang des Arbeitsbin gekoppelten ersten Eingang, einem mit einem Ausgang des schnellen Bin gekoppelten zweiten Eingang und einem mit einem Sende-DMA-Warteschlangenmanager gekoppelten Ausgang umfasst, der zum Empfangen von Datenpaketen von den durch die Wartschlangenkennungen identifizierten Sendewarteschlangen konfiguriert ist.

12. System nach einem vorherigen Anspruch, wobei der mit jeder Sendewarteschlange assoziierte Taktwert eine Inter-Paket-Mindestlücke für von der Sendewarteschlange abgeleitete Datenpakete anzeigt.

13. Verfahren zum Regulieren des Takts von mehreren Sendewarteschlangen durch ein Netzwerkschnittstellengerät (116), wobei die mehreren Sendewarteschlangen in einem Speicher eines Host-Computersystems gehalten werden, der für das Netzwerkschnittstellengerät über einen Kommunikationsbus (118) zugänglich ist, und das Verfahren Folgendes beinhaltet und **gekennzeichnet ist durch**:
Schreiben, **durch** das Host-Computersystem mittels einer Busschnittstelleneinheit (226) des Netzwerkschnittstellengeräts, eines mit einer ersten Sendewarteschlange der mehreren Sendewarteschlangen assoziierten ersten Taktwertes in eine Takttabelle des Netzwerkschnittstellengeräts;
Zuordnen, in Abhängigkeit vom ersten Taktwert, einer die erste Sendewarteschlange identifizierenden Warteschlangenkennung auf einen von mehreren Bins (240, 250, 260), wobei jeder Bin eine vorgegebene Taktschwelle hat; und
Auswählen, an dem Netzwerkschnittstellengerät, von Warteschlangenkennungen aus den mehreren Bins gemäß den vorgegebenen Taktschwellen der mehreren Bins; und
Senden **durch** das Netzwerkgerät, nach dem Auswählen der die erste Sendewarteschlange identifizierenden Warteschlangenkennung, des Netzwerkschnittstellengeräts, das ein oder mehrere Datenpakete überträgt, aus der ersten Sendewarteschlange.

## Revendications

1. Système de réglage de transmission à partir d'une pluralité de files d'attente de transmission dans la mémoire d'un ordinateur hôte accessible à un dispositif d'interface de réseau (116), par l'intermédiaire d'un bus de communication (118), le système comprenant à hauteur du dispositif d'interface de réseau :
une pluralité de cellules (240, 250, 260), chaque cellule ayant un seuil de réglage défini ;
**caractérisé en ce que** le système comporte :
un tableau de réglage stockant des valeurs de réglage correspondant à la pluralité de files d'attente de transmission ;
une unité d'interface de bus (226), configurée pour permettre au système informatique hôte d'écrire des valeurs de réglage, sur le bus de communication, dans le tableau de réglage correspondant à la pluralité de files d'attente de transmission ;
un contrôleur de stockage en cellule (220) pour attribuer des identifiants de files d'attente de la pluralité de files d'attente de transmission à la pluralité de cellules en fonction des valeurs de réglage stockées dans le tableau de réglage ; et
un arbitre de sortie (230, 235, 270, 280) configuré pour sélectionner des identifiants de files d'attente à partir de la pluralité de cellules conformément aux seuils de réglage définis des cellules, les identifiants de files d'attente identifiant les files d'attente de transmission comportant des paquets de données à transmettre et les cellules étant accessibles à l'arbitre de sortie sans accéder au bus de communication.

2. Système selon la revendication 1, dans lequel, pour les files d'attente de transmission au niveau de l'utilisateur, le système informatique hôte est configuré pour écrire des valeurs de réglage dans le tableau de réglage sans passer par le noyau.

3. Système selon la revendication 2, dans lequel le système informatique hôte est configuré pour écrire une valeur de réglage dans le tableau de réglage pour une file d'attente de transmission au niveau de l'utilisateur au moyen d'une cartographie de mémoire entre l'entrée respective dans le tableau de réglage et l'espace d'adresses d'un pilote au niveau de l'utilisateur.

4. Système selon l'une quelconque des revendications précédentes, dans lequel la pluralité des cellules comporte une cellule de travail dans laquelle le contrôleur de stockage en cellule attribue à la cellule de travail tous les paquets de données de la file d'attente de transmission associée à un premier intervalle entre paquets qui est inférieur ou égal à un premier seuil.

5. Système selon la revendication 4, dans lequel la pluralité de cellules comprend une cellule rapide dans laquelle le contrôleur de stockage en cellule attribue à la cellule rapide tous les paquets de données de la file d'attente de transmission avec un deuxième intervalle entre paquets qui est inférieur ou égal à un deuxième seuil mais supérieur au premier seuil.

6. Système selon la revendication 5, dans lequel la pluralité des cellules comprend une cellule lente, dans lequel le contrôleur de stockage en cellule attribue à la cellule lente tous les paquets de données de la file d'attente de transmission associée à un troisième intervalle entre paquets qui est inférieur ou égal à un troisième seuil mais supérieur au deuxième seuil.

7. Système selon la revendication 6, dans lequel l'arbitre de sortie comprend un premier multiplexeur aux fins d'arbitrage entre une première entrée et une deuxième entrée, et comportant une sortie vers la première cellule, le premier multiplexeur comportant la première entrée pour recevoir les paquets de données à partir du contrôleur de stockage en cellule, la deuxième entrée pour recevoir les paquets de données d'une sortie de la cellule rapide, et une troisième entrée pour recevoir les paquets de données qui ont été actualisés à partir de la cellule lente.

8. Système selon la revendication 7, dans lequel la deuxième entrée de l'arbitre de sortie reçoit les paquets de données de la sortie de la cellule rapide qui sont recyclés de retour vers la cellule rapide.

9. Système selon, soit la revendication 7, soit la revendication 8, dans lequel l'arbitre de sortie comprend un deuxième multiplexeur aux fins d'arbitrage entre une première entrée et une deuxième entrée, et comportant une sortie couplée à la cellule lente, le deuxième multiplexeur comportant la première entrée pour recevoir les paquets de données du contrôleur de stockage en cellule, et la deuxième entrée pour recevoir les paquets de données d'une sortie de la cellule lente qui recycle les paquets de données de retour dans la cellule lente.

10. Système selon la revendication 9, dans lequel la deuxième entrée de l'arbitre de sortie reçoit les paquets de données de la sortie de la cellule lente qui sont recyclés de retour dans la cellule lente.

11. Système selon, soit la revendication 9, soit la revendication 10, dans lequel l'arbitre de sortie comprend un troisième multiplexeur comportant une première entrée couplée à une sortie de la cellule de travail, une deuxième entrée couplée à une sortie de la cellule rapide, et une sortie couplée à un gestionnaire de file d'attente DMA de transmission configuré pour extraire des paquets de données des filles d'attente de transmission identifiées par les identifiants de files d'attente.

12. Système selon l'une quelconque des revendications précédentes, dans lequel la valeur de réglage associée à chaque fille d'attente de transmission indique un intervalle entre paquets minimal pour des paquets de données dérivés de la file d'attente de transmission.

13. Procédé pour contrôler le réglage d'une pluralité de files d'attente de transmission par l'intermédiaire d'un dispositif d'interface de réseau (116), la pluralité de files d'attente de transmission étant conservée dans la mémoire d'un système informatique hôte accessible au dispositif d'interface de réseau par l'intermédiaire d'un bus de communication (118), et le procédé comprenant et étant **caractérisé par** :
l'écriture par le système informatique hôte, au moyen d'une unité d'interface de bus (226) du dispositif d'interface de réseau, une première valeur de réglage associée à une première file d'attente de transmission de la pluralité de files d'attente de transmission dans un tableau de réglage du dispositif d'interface de réseau ;
l'attribution, en fonction de la première valeur de réglage, un identifiant de file d'attente identifiant la première file d'attente de transmission à l'une des cellules d'une pluralité de cellules (240, 250, 260), chaque cellule ayant un seuil de réglage défini ; et
à hauteur du dispositif d'interface de réseau, la sélection d'identifiants de files d'attente de la pluralité de cellules conformément aux seuils de réglage définis de la pluralité de cellules ; et
sur sélection de l'identifiant de files d'attente identifiant la première file d'attente de transmission, la transmission par le dispositif d'interface de réseau d'un ou de plusieurs paquets de données de la première file d'attente de transmission.
